(19) Europäisches Patentamt

European Patent Office

Office européen des brevets

(11) **EP 1 058 822 B1**

(12) **EUROPÄISCHE PATENTSCHRIFT**

(45) Veröffentlichungstag und Bekanntmachung des Hinweises auf die Patenterteilung:
**21.07.2004   Patentblatt 2004/30**

(21) Anmeldenummer: **99936114.0**

(22) Anmeldetag: **12.02.1999**

(51) Int Cl.⁷: $G01L\ 9/00$, $G01L\ 11/02$

(86) Internationale Anmeldenummer:
**PCT/CH1999/000065**

(87) Internationale Veröffentlichungsnummer:
**WO 1999/044026 (02.09.1999 Gazette 1999/35)**

(54) **FASER-BRAGG-GITTER-DRUCKSENSOR MIT INTEGRIERBAREM FASER-BRAGG-GITTER-TEMPERATURSENSOR**

PRESSURE SENSOR WITH FIBRE-INTEGRATED BRAGG GRATING, COMPRISING AN INTEGRATED TEMPERATURE SENSOR WITH FIBRE-INTEGRATED BRAGG GRATING

CAPTEUR DE PRESSION A RESEAU DE BRAGG INTEGRE A LA FIBRE, COMPORTANT UN CAPTEUR DE TEMPERATURE A RESEAU DE BRAGG INTEGRE A LA FIBRE

(84) Benannte Vertragsstaaten:
**DE FR GB**

(30) Priorität: **27.02.1998   DE 19808222**

(43) Veröffentlichungstag der Anmeldung:
**13.12.2000   Patentblatt 2000/50**

(73) Patentinhaber: **ABB RESEARCH LTD.
8050 Zürich (CH)**

(72) Erfinder:
• **BOHNERT, Klaus
  CH-5443 Niederrohrdorf (CH)**
• **BRÄNDLE, Hubert
  CH-8102 Oberengstringen (CH)**
• **BODOR, Patrick
  CH-5316 Gippingen (CH)**

(74) Vertreter: **ABB Patent Attorneys
c/o ABB Schweiz AG
Brown Boveri Strasse 6
5400 Baden (CH)**

(56) Entgegenhaltungen:
WO-A-99/00653          US-A- 5 414 507
US-A- 5 426 297        US-A- 5 877 426

**Beschreibung**

**TECHNISCHES GEBIET**

Die Erfindung bezieht sich auf das Gebiet der faseroptischen Druck- und Temperaturmessung. Sie geht aus von einem faseroptischen Sensor nach dem Oberbegriff des Anspruchs 1.

**STAND DER TECHNIK**

Bei der Erdölförderung müssen Bohrlöcher hinsichtlich Druck und Temperatur überwacht werden. Im Bohrloch können die Flüssigkeitsdrücke bis zu 100 MPa (1000 bar) und die Temperaturen bis zu über 200 °C betragen. Zur Druckmessung bis zu ca. 170 °C werden häufig elektrische Sensoren eingesetzt, wie z. B. Piezowiderstände, piezoelektrische Elemente, kapazitive Sonden oder Kristallresonatoren. Bekannt ist auch die Verwendung optischer Drucksensoren, die sich durch gute Hochtemperaturtauglichkeit, Korrosionsbeständigkeit und elektromagnetische Störunempfindlichkeit auszeichnen. Beispiele hierfür sind mechanische Resonatoren, die optisch aktiviert und optisch ausgelesen werden, elastooptische Sensoren, optische Sensoren mit druckempfindlicher Membran oder Fabry - Perot Resonatoren.

US-A-5'414'507 offenbart einen Drucksensor zur Messung eines Druckes in Ölbohrlöchern. Dieser Drucksensor weist ein Sensorelement in Form eines faseroptischen Interferometers auf. Ein erster faseroptischer Zweig des Interferometers dient dabei als Sensorfaser, ein zweiter als Referenzfaser. Die zwei Fasern sind in einem Gehäuse gehalten, wobei die Sensorfaser mit einem Druckkörper verbunden ist, welcher einen allseitigen Druck eines Mediums in eine longitudinale Kompression der Sensorfaser umsetzen soll.

US-A-5'426'297 offenbart einen optischen Fasersensor mit einem Bragg-Gitter, welcher zur Bestimmung einer Dehnung eines Festkörpers dient. Hierfür ist die Faser auf dem Festkörper montiert oder in diesen eingelassen.

Ein weiterer optischer Sensor mit Faser - Bragg - Gittern zur Messung von Materialdehnungen ist z. B. aus dem U. S. Pat. No. 4,761,073 bekannt. Ein Brechungsindexgitter, welches durch UV - Licht in eine Monomodefaser eingeschrieben ist, wirkt als Reaktor oder Transmissionsfilter mit einer charakteristischen Bragg - Wellenlänge $\lambda_B$. Durch longitudinale Faserdehnungen werden Gitterperiode und Brechungsindex geändert und die Bragg - Wellenlänge $\lambda_B$ verschoben. Die Ausgangssignale sind wellenlängenkodiert und unabhängig von der empfangenen Lichtleistung. Serielles Multiplexen mehrerer Dehnungssensoren ist sehr einfach realisierbar, indem entlang einer Sensorfaser mehrere Bragg - Gitter mit unterschiedlichen Reflexionswellenlängen eingeschrieben sind, deren Signale spektral getrennt werden können. Es wird vorgeschlagen, Signalstörungen aufgrund thermischer Gitterdehnungen mit Hilfe superponierter Gitter unterschiedlicher Reflexionswellenlängen zu eliminieren. Bekanntermassen ist Multiplexen statt durch wellenlängenselektive auch durch zeitaufgelöste Messungen mit einer gepulsten Lichtquelle möglich. Zur Überwachung von Körperdeformationen ist die Sensorfaser typischerweise an der Oberfläche des Körpers befestigt oder im Körper eingebettet. Der Messbereich ist bei Dehnungsmessungen mit Bragg - Gittern durch die Faserbruchgrenze eingeschränkt.

Faser - Bragg - Gitter Sensoren zur Messung isotroper Drücke von Flüssigkeiten werden in dem Artikel von M. G. Xu et al., "Optical In-Fibre Grating High Pressure Sensor", Electronics Letters 29 (4), 398 - 399 (1993), vorgestellt. Die Sensorfaser wird mit dem Bragg - Gitter in ein Hochdruckgefäss eingebracht und unmittelbar dem hydrostatischen Druck eines Fluids ausgesetzt. Die isotrope Druckempfindlichkeit ist jedoch für Bragg - Gitter in Glasfasern ausserordentlich niedrig; die spezifische Braggwellenlängenverschiebung beträgt bei 1550 nm typischerweise nur 0,0003 nm / 100 kPa. Zudem ist es wegen der grossen Temperaturempfindlichkeit von typischerweise 0,01 nm / °C erforderlich, Temperatureffekte zu kompensieren.

In dem U. S. Pat. No. 5,469,520 wird eine Apparatur zur longitudinalen Kompression optischer Fasern beschrieben. Die Sensorfaser wird mit den Faser - Bragg - Gittern in mehrere zylinderförmige Ferrule und zwei endseitige Röhrchen eingefädelt und die Ferrule und Röhrchen in einer Nut zwischen zwei miteinander verschraubbaren Metallblöcken gelagert. Die Ferrule sind in der Nut seitlich verschiebbar, ein Röhrchen ist mit den Metallblöcken verbunden und das andere auf einem fahrbaren Schlitten befestigt. Durch Verschieben des Schlittens wird die Faser auf den freien Strecken zwischen den Röhrchen, insbesondere zwischen den Ferrulen, zusammengepresst und zugleich durch die Nut ein seitliches Ausweichen verhindert. Wegen der ca. 20fach grösseren Druck- als Dehnungsbelastbarkeit von Glasfasern ("fused silica fibers") ist ein sehr grosser Druckmessbereich realisierbar.

Das U. S. Pat. No. 5,042,898 offenbart eine Vorrichtung zur Temperaturstabilisierung von Faser - Bragg - Gittern. Das Faser - Bragg - Gitter ist über einen Spalt zwischen zwei Trägern mit unterschiedlichen thermischen Ausdehnungskoeffizienten gespannt. Die Träger sind an einem gemeinsamen Abstützungspunkt miteinander über ein Abstandsgewinde verschraubt, mit welchem die Spaltbreite bzw. Faservorspannung bzw. Bragg - Wellenlänge einstellbar ist. Die differentielle Faserdehnung zwischen den Faserhalterungen ist genau so dimensioniert, dass die thermisch induzierten Änderungen der Braggwellenlänge kompensierbar sind. Dies wird durch die Wahl der Trägermaterialien und der Abstände zwischen dem Abstützungspunkt und den Faserhalterungen erreicht. In einer auf Druck beanspruchbaren Ausführungsform ist im Spalt eine Glaskapillare zur Aufnahme des Faser - Bragg - Gitters vorgesehen. Zur Temperaturkompensation sind die Trägermaterialien sowie die Länge, der Innen- und der Aussendurchmesser der Glaskapillare aufeinander abzustimmen. Ein solcherart temperaturstabilisiertes Faser - Bragg - Gitter ist als Wellenlängenstandard, zur Stabilisierung der Emissionswellenlänge von Laserdioden oder als Wellenlängenfilter in faseroptischen Sensoren einsetzbar.

## DARSTELLUNG DER ERFINDUNG

Aufgabe der vorliegenden Erfindung ist es,'einen Faser - Bragg - Gitter Drucksensor anzugeben, welcher zur wellenlängenkodierten Messung isotroper Drükke in Flüssigkeiten oder Gasen geeignet ist und sich durch einen kompakten, für hohe Drücke auslegbaren Transducer auszeichnet. Diese Aufgabe wird erfindungsgemäss durch die Merkmale des Anspruchs 1 gelöst.

Kern der Erfindung ist es nämlich, einen faseroptischen Transducer anzugeben, in dem eine Drucksensorfaser mit einem Faser - Bragg - Gitter mittels Faserhalterungen an Trägern befestigt ist und mindestens ein Träger mit einem Druckkörper zur Umsetzung eines allseitigen Drucks eines Mediums in eine longitudinale Dehnung der Drucksensorfaser ausgerüstet ist.

Ein erstes Ausführungsbeispiel zeigt ein Druckübertragungselement (=Transducer) mit einem druckbelasteten Innenzylinder und einem unbelasteten Aussenzylinder, die in einem Gehäuse angeordnet sind, deren differentielle Druckdehnung auf eine Sensorfaser übertragen wird und deren differentielle Temperaturdehnung die Bragg - Wellenlänge der Sensorfaser stabilisiert.

Ein zweites Ausführungsbeispiel betrifft Varianten des Transducers, bei denen der Aussenzylinder zugleich Gehäuse ist und auf Druck beansprucht wird und bei denen die Sensorfaser auch auf Kompression belastbar ist.

Ein drittes Ausführungsbeispiel stellt einen Transducer mit von innen druckbelastetem Ringzylinder und kraftübertragenden Mittenzylindern zur beidseitigen Dehnung der Sensorfaser dar.

Ein viertes Ausführungsbeispiel stellt einen Transducer mit von aussen druckbelastetem Stützzylinder und entgegengesetzt druckbelasteten Mittenzylindern zur beidseitigen Druckentlastung der Sensorfaser dar;

Weitere Ausführungsbeispiele betreffen Faserhalterungen und Ferrule zur Fixierung und Vorspannung der Drucksensorfaser im Transducer.

Ein anderes Ausführungsbeispiel stellt eine serielle, reflexive Multiplexanordnung mehrerer Faser - Bragg - Gitter - Drucksensoren mit unterschiedlichen Bragg - Wellenlängen dar, die über eine gemeiname Breitbandlichtquelle gespiesen und wellenlängenselektiv detektiert werden.

Zusätzliche Ausführungsbeispiele ergeben sich durch Kombination erfindungswesentlicher Merkmale und aus den abhängigen Ansprüchen.

Ein wichtiger Vorteil des erfindungsgemässen Faser - Bragg - Gitter - Drucksensors besteht darin, dass mit dem wellenlängenkodierten Drucksignal eine hohe Messgenauigkeit, ein grosser Druckmessbereich bis zu 100 MPa und eine grosse Messdistanz zwischen passivem Sensorkopf und aktiver Optik und Elektronik realisierbar sind.

Ein weiterer Vorteil des Faser - Bragg - Gitter - Drucksensors besteht darin, dass die Temperaturempfindlichkeit durch einen differentiellen Aufbau des Transducers weitgehend zurückgedrängt und dadurch die Zuverlässigkeit (quasi)statischer Druckmessungen deutlich verbessert werden können.

Sehr vorteilhaft an dem Faser - Bragg - Gitter Drucksensor ist schliesslich auch die einfache Kombinierbarkeit mit einem Faser - Bragg - Gitter Temperatursensor, die einfache Multiplexierbarkeit mehrerer kombinierter Druck- und Temperatursensoren und insgesamt die hervorragende Eignung für den Einsatz unter hohen Drücken, hohen Temperaturen und starker Korrosion insbesondere in Erdölbohrlöchern.

## KURZE BESCHREIBUNG DER ZEICHNUNG

Die Erfindung wird nachstehend anhand von Ausführungsbeispielen erläutert. Es zeigen für einen faseroptischen temperaturkompensierten Drucksensor mit integriertem Temperatursensor:

Fig. 1a, 1b     ein mechanisches Druckübertragungselement (=Transducer) mit druckbelastetem Innenzylinder und unbelastetem Aussenzylinder zur differentiellen Dehnung der Sensorfaser;

Fig. 2a, 2b     einen Transducer mit entgegengesetzt druckbelastetem Innen- und Aussenzylinder zur Druckentlastung (2a) oder zur Kompression (2b) der Sensorfaser;

Fig. 3a     einen Transducer mit von innen druckbelastetem Hohlzylinder und kraftübertragenden Mittenzylindern zur beidseitigen Dehnung der Sensorfaser;

Fig. 3b        einen Transducer mit von aussen druckbelastetem Hohlzylinder und entgegengesetzt druckbelasteten Mittenzylindern zur beidseitigen Druckentlastung der Sensorfaser;

Fig. 4a-4e     Faserhalterungen und Ferrule: (4a) eine angespleisste Glaskapillare, (4b) eine Glaslot - Verbindung, (4c) ein Klemmferrul, (4d) eine eingespleisste Faser mit dickem Cladding; und (4e) eine Befestigung der Ferrule am Transducer;

Fig. 5         eine Reflexionsanordnung mehrerer wellenlängenmultiplexierter Druck- und Temperatursensoren.

In den Figuren sind gleiche Teile mit gleichen Bezugszeichen versehen.

## WEGE ZUR AUSFÜHRUNG DER ERFINDUNG

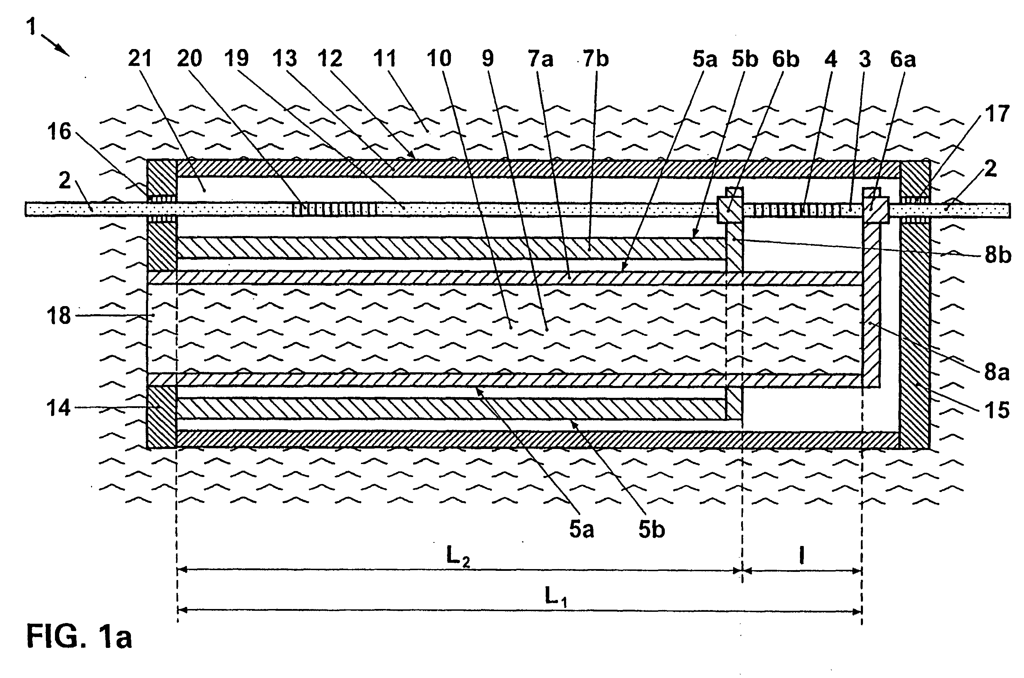

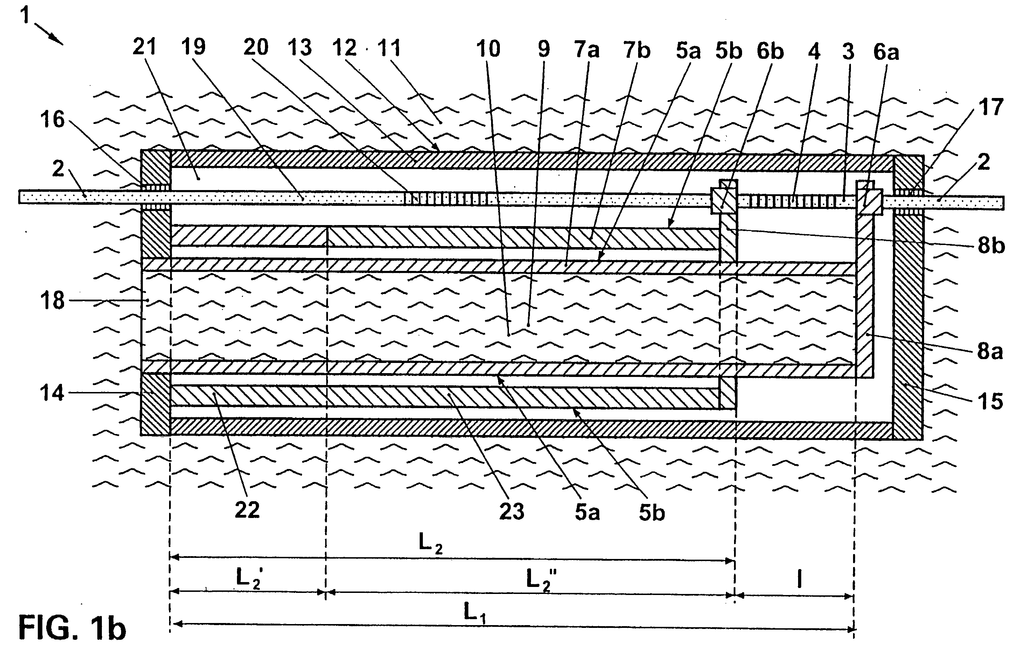

Die Fig. 1a, 1b zeigen schematisch im Querschnitt eine erste Ausführungsform des Sensors 1 oder Druckübertragungselementes (=Transducers) 1. Der Transducer 1 enthält eine optische Faser 2, die zwei Abschnitte mit einer Drucksensorfaser 3 und einer optionalen Temperatursensorfaser 19 mit je einem eingeschriebenen Faser - Bragg - Gitter 4, 20 aufweist. Die Drucksensorfaser 3 ist zwischen zwei Faser- oder Ferrulhalterungen 6a, 6b gehaltert und vorgespannt. Die Halterungen 6a, 6b sind über Endplatten 8a, 8b mit Trägern 5a, 5b fest verbunden, so dass deren druck- und temperaturinduzierte Dehnungen auf die Drucksensorfaser 3 übertragbar sind.

Ein erster Träger 5a umfasst als Mess- oder Druckzylinder 7a einen durch Innendruck dehnbaren Innenzylinder 7a, der eine Öffnung 18 in einer Transducer - Wand 14 und einen Hohlraum 9 mit einer Stempelfläche 8a aufweist. Die Öffnung 18 dient zur Druckaufnahme von einem Medium 11, der Hohlraum 9 zur Druckübertragung mittels eines Fluids 10 und die Stempelfläche 8a zur Druckabgabe an eine Faserhalterung 6a. Bei dem Fluid 10 handelt es sich normalerweise um das Medium 11 selber. Bei allen Transducerausführung (Fig. 1a - 3b) kann die Öffnung 18 klein gewählt und eventuell mit einem Druckausgleichselement 29, z. B. einer Membran oder einem Faltenbalg, ausgerüstet sein und als vorzugsweise wenig kompressibles Fluid 10 ein Silikonöl o. ä. vorgesehen sein. Der Innenzylinder 7a ist mit der Wand 14 im Bereich der Öffnung 18 druckdicht verbunden. Das druckisolierte Gehäuseinnere 21 ist günstigerweise mit einem Niederdruckgas, z. B. trockenem Stickstoff bei wenigen 100 mbar, gefüllt. Dadurch ist ein hinreichender Wärmeübergang zwischen dem Medium 11 oder Transducer 1 und dem temperaturempfindlichen Faser - Bragg - Gitter 20 gewährleistet und zugleich der Einfluss temperaturbedingter Gasdruckänderungen im Gehäuseinneren klein gehalten. In weniger anspruchsvollen Anwendungen kann auch eine Befüllung mit Normaldruck oder Vakuum genügen. Ein zweiter Träger 5b umfasst einen vom Umgebungsmedium 11 abgeschirmten und daher unbelastbaren Referenzzylinder oder Aussenzylinder 7b, der nicht mit dem Fluid 10 in Berührung steht. Die Zylinder 7a, 7b sind an der Transducer - Wand 14 befestigt und in einem Transducer - Gehäuse 12 gekapselt. Das Gehäuse 12 besteht vorzugsweise aus einem Gehäusezylinder 13 mit Wänden 14, 15, in die druckdichte Faserdurchführungen 16, 17 eingelassen sind. Zur Terminierung von Faserkabeln aussen an den Wänden 14, 15 können nicht dargestellte Klemmen o. ä. vorgesehen sein.

Die Druck- und Temperaturempfindlichkeit eines Sensors 1 gemäss Fig. 1a, 1b kann durch eine erfindungsgemässe Dimensionierung des Transducers 1 angepasst und insbesondere optimiert werden. Die druckinduzierte Dehnung $\Delta L_1$ des Innenzylinders 7a mit Länge $L_1$ ist

$$\Delta L_1 = \varepsilon_t \, L_1 \qquad\qquad (G1a)$$

wobei sich $\varepsilon_t$, das heisst die longitudinale Dehnung des Innenzylinders 7a, berechnet aus

$$\varepsilon_t = (1 / E) \cdot [\sigma_x - \mu(\sigma_\varphi + \sigma_r)] \qquad\qquad (G1b)$$

$$\varepsilon_t = (1 / E) \cdot [pR_i^2 / (R_a^2 - R_i^2)] \cdot [1 - 2\mu] \qquad\qquad (G1c)$$

mit Innenradius $R_i$, Aussenradius $R_a$, Young' schem Elastizitätsmodul E, Poisson-Zahl $\mu$ und Druck p des zu messenden Mediums 11.

$\sigma_x$ ist dabei die longitudinale, $\sigma_r(r)$ die radiale und $\sigma_\varphi(r)$ die tangentiale Spannung des Innenzylinders 7a:

$$\sigma_x = pR_i^2 / (R_a^2 - R_i^2) \tag{G1d}$$

$$\sigma_r(r) = [pR_i^2 - pR_i^2 R_a^2/r^2] / (R_a^2 - R_i^2) \tag{G1e}$$

$$\sigma_\varphi(r) = [pR_i^2 + pR_i^2 R_a^2/r^2] / (R_a^2 - R_i^2) \tag{G1f}$$

Die Länge $L_2$ des Aussenzylinders 7b bleibt unverändert, so dass die Drucksensorfaser 3 der Länge l eine Dehnung

$$\Delta l = \Delta L_1 \tag{G2}$$

erfährt. Glasfasern ("fused silica fibers") zeigen für relative Dehnungen $\Delta l$ / l bis zu ca. 0,01 ein linear elastisches, hysteresefreies Verhalten. In diesem Bereich ist auch die Verschiebung der Bragg - Wellenlänge proportional zur Dehnung.

Andererseits ist der lineare Elastizitätsbereich für Stahl als typisches Material für einen Innenzylinder 7a auf relative Dehnungen $\Delta L_1$ / $L_1 \leq 0,001$ beschränkt.

Für einen grossen Druckmessbereich mit hoher Auflösung sollte die zulässige Dehnung der Faser möglichst weitgehend ausgenutzt werden. Andererseits begünstigt eine nicht zu hohe Dehnung eine lange Lebensdauer der Faser. Eine maximale Faserdehnung $\Delta l/l = 0.005$ ist ein vernünftiger Kompromiss zwischen hoher Auflösung und langer Lebensdauer. Es gilt dann die Beziehung

$$p_{max} \cdot L_1 / l = 0{,}005 \cdot E \cdot (R_a^2 - R_i^2) / [R_i^2 (1-2\mu)] \tag{G3}$$

mit $p_{max}$ = Maximaldruck, wobei die Dehnungsgrenze $\Delta L_1$ / $L_1 \leq 0,001$ des Innenzylinders 7a oder Transducers 1 eingehalten sein soll. Hierzu ein quantitatives Beispiel: $p_{max} = 100$ MPa, E = 1, 96 $\cdot 10^{11}$ Pa, $\mu = 0.28$, $R_a = 4$ mm, $R_i$ = 2,8 mm. Dann ist das Längenverhältnis von Innenzylinder 7a zu Drucksensorfaser 3 oder das Dehnungsübersetzungsverhältnis $L_1$ / l = 23 zu wählen, beispielsweise l = 15 mm und $L_1 = 34.5$ cm. Für die gegebenen Parameter beträgt die der longitudinalen Spannung $\sigma_x$ des Innenzylinders 7a entsprechende Deformation $0,5 \cdot 10^{-3}$. Die der tangentialen Spannung entsprechende Deformation beträgt an der Aussenseite ($r = R_a$) des Innenzylinders

$$\Delta L_t / L_t = \sigma_\varphi(R_a)/E = 2 \cdot (p / E) \cdot R_i^2 / (R_a^2 - R_i^2) = 1{,}0 \cdot 10^{-3} \tag{G4a}$$

und an der Innenseite ($r = R_i$)

$$\Delta L_t / L_t = \sigma_\varphi(R_i)/E = 2 \cdot (p / E) \cdot R_i^2 / (R_a^2 - R_i^2) = 1{,}5 \cdot 10^{-3} \tag{G4b}$$

Die der radiale Spannung entsprechende Deformation beträgt an der Aussenseite des Innenzylinders

$$\Delta L_r / L_r = \sigma_r(R_a)/E = 0 \tag{G4c}$$

und an der Innenseite des Innenzylinders

$$\Delta L_r / L_r = \sigma_r(R_i)/E = -(p / E) = 0.5 \cdot 10^{-3} \tag{G4d}$$

Die Deformationen bleiben damit im elastischen Bereich.

Die Erfindung betrifft auch eine Kompensation thermisch induzierter Bragg - Wellenlängenverschiebungen der Drucksensorfaser 3 durch eine entgegengesetzte differentielle thermische Ausdehnung der Zylinder 7a, 7b. Im einfachsten Fall gemäss Fig. 1a werden die Zylinder 7a, 7b aus zwei Materialien mit unterschiedlichen thermischen

Ausdehnungskoeffizienten $\alpha_1$ und $\alpha_2$ gewählt. Die Dimensionierung der Zylinderlängen $L_1$ und $L_2$ erfolgt wie in dem eingangs erwähnten U. S. Pat. No. 5,042,898. Die relativen Bragg - Wellenlängenverschiebungen durch Temperatur $(\Delta\lambda_B)_T / \lambda_B$ und durch temperaturinduzierte Faserdehnung $(\Delta\lambda_B)_\varepsilon / \lambda_B$ sollen einander kompensieren, d. h. entgegengesetzt gleich gross sein

$$(\Delta\lambda_B)_T / \lambda_B = - (\Delta\lambda_B)_\varepsilon / \lambda_B \ . \tag{G5}$$

Hieraus ergibt sich mit Hilfe der Gleichungen

$$(\Delta\lambda_B)_T / \lambda_B = 6{,}67 \cdot 10^{-6} \ ^\circ C^{-1} \ , \tag{G6}$$

$$(\Delta\lambda_B)_\varepsilon / \lambda_B = 0{,}78 \cdot \Delta\varepsilon_T \ \text{und} \tag{G7}$$

$$\Delta\varepsilon_T = [(\alpha_1 \cdot L_1 - \alpha_2 \cdot L_2 - \alpha_f \cdot l) / l] \cdot \Delta T \tag{G8}$$

wobei $\alpha_f = 0{,}5 \cdot 10^{-6} \ ^\circ C^{-1}$ = thermische Ausdehnung der Drucksensorfaser 3, die Dimensionierungsvorschrift für die Zylinder 7a, 7b

$$(\alpha_2 \cdot L_2 - \alpha_1 \cdot L_1) / l = 8{,}0 \cdot 10^{-6} \ ^\circ C^{-1} \ , \tag{G9}$$

wobei $l = L_1 - L_2$. Unter der Annahme $l = 15$ mm, $L_1 = 30$ cm und somit $L_2 = 28{,}5$ cm findet man für $\alpha_1 = 12{,}4 \cdot 10^{-6}$ $^\circ C^{-1}$ den erforderlichen thermischen Ausdehnungskoeffizienten des Aussenzylinders 7b zu $\alpha_2 = 13{,}5 \cdot 10^{-6} \ ^\circ C^{-1}$. Insbesondere muss die Faserdehnung $\Delta\varepsilon_T$ mit zunehmender Temperatur und bei konstantem Druck abnehmen. Die Vorspannung soll daher so gross gewählt sein, dass die Drucksensorfaser 3 auch bei den höchsten Betriebstemperaturen und verschwindendem Druck noch unter mechanischer Spannung steht.

Dieser Transducer 1 zeichnet sich durch eine hohe mechanische Stabilität, geringe Temperaturempfindlichkeit und einfache Herstellbarkeit aus. Vorzugsweise bestehen die Zylinder 7a, 7b aus rostfreiem Stahl. Geeignete Transducermaterialien sollen neben linearen thermischen Ausdehnungskoeffizienten gemäss Gleichung (G9) auch eine geringe Nichtlinearität der thermischen Ausdehnung und eine hohe Korrosionsbeständigkeit aufweisen. Diese Anforderungen sind besonders wichtig bei Sensoren für Ölbohrlöchern, da ein grosser Temperaturbereich (0 °C - 230 °C) abgedeckt werden muss und extrem starke Korrosionsgefahr besteht. Somit ist die Auswahl an Stählen auf wenige, extrem korrosionsbeständige Sorten eingeschränkt und in vielen Fällen ist die passive Temperaturkompensation nicht oder nur unvollständig durchführbar.

In Fig. 1b ist eine Variante des Transducers 1 angegeben, welche auch bei eingeschränkter Materialauswahl eine vollständige Temperaturkompensation erlaubt. Die erfindungsgemässe Idee besteht darin, einen oder beide Zylinder 7a, 7b aus zwei oder mehreren Segmenten mit wählbarer Länge und unterschiedlichen thermischen Ausdehnungskoeffizienten zusammenzusetzen und auf diese Weise die differentielle Ausdehnung der Zylinder 7a, 7b masszuschneidern. Insbesondere ist der Innenzylinder 7a wie zuvor einstückig und der Aussenzylinder 7b zweistückig ausgelegt. Das Segment 22 bestehe beispielsweise aus dem gleichen Stahltyp wie der Innenzylinder 7a. Es habe eine Länge $L_2'$ und den Ausdehnungskoeffizienten $\alpha_1$. Das Segment 23 bestehe aus einem anderen Stahltyp, habe eine Länge $L_2''$ und einen Ausdehnungskoeffizienten $\alpha_2$. In diesem Fall gelten neu die Beziehungen

$$(\alpha_2 \cdot L_2'' - \alpha_1 \cdot (L_2'' + l)) / l = 8{,}0 \cdot 10^{-6} \ ^\circ C^{-1} \ , \tag{G10}$$

$$L_2 = L_2' + L_2'' \ . \tag{G11}$$

Für eine vollständige Temperaturkompensation sollen also bei gegebenen Ausdehnungskoeffizienten $\alpha_1$, $\alpha_2$ und Drucksensorfaserlänge $l$ die Segmentlängen $L_2''$, $L_2'$ des Aussenzylinders 7b gemäss den Gleichungen (G10), (G11) gewählt sein, wobei die Innenzylinderlänge $L_1 = l + L_2$ ist. Bevozugt ist eine Nickel - Basislegierung (z. B. "Hastealloy C-22" der Firma Hynes International mit $\alpha_1 = 12{,}4 \cdot 10^{-6} \ ^\circ C^{-1}$) mit einem Chrom - Nickelstahl (z. B. "AISI

304" mit $\alpha_2$ = 17,0 • $10^{-6}$ °$C^{-1}$) kombinierbar. Im obigen Beispiel mit l = 15 mm und $L_1$ = 30 cm sind dann $L_2$' = 6,65 cm und $L_2$" = 21,85 cm zu wählen.

Vorzugsweise ist in den Fig. 1a und 1b und allgemein bei allen offenbarten Transducern 1 eine Temperatursensorfaser 19 mit einem nicht vorgespannten Faser - Bragg - Gitter 20 vorgesehen. Die Temperaturinformation, die aus der temperaturinduzierten Bragg - Wellenlängenverschiebung gewonnen wird, kann ausser zur Überwachung der Umgebungstemperatur auch zur elektronischen Kompensation einer Resttemperaturabhängigkeit der Druckmessung dienen.

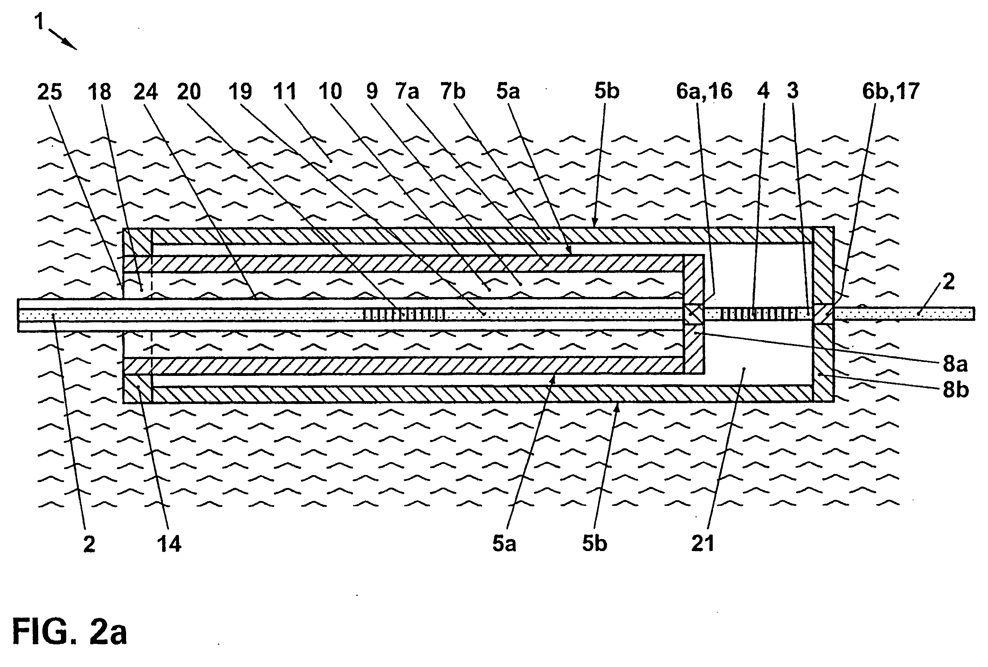

Fig. 2a zeigt eine Ausführungsform des Transducers 1 ohne Kapselung 12. Der Transducer 1 ist ganz analog wie zuvor aufgebaut, wobei jedoch der Aussenzylinder 7b zugleich als Gehäuse 12 fungiert. Sowohl der Innenzylinder 7a als auch der Aussenzylinder 7b besitzen Stempelflächen 8a und 8b, die auf entgegengesetzten Druck von aussen beanspruchbar sind. Das Volumen 21 zwischen den Zylindern 7a, 7b ist druckdicht verschlossen und wie zuvor vorzugsweise mit Niederdruckgas gefüllt. Die Faser 2 erstreckt sich entlang der Achse der konzentrischen Zylinder 7a, 7b und bildet wiederum eine Drucksensorfaser 3 und insbesondere eine Temperatursensorfaser 19 mit den zugehörigen Faser - Bragg - Gittern 4, 20. Die Faserhalterungen 6a, 6b für die Drucksensorfaser 3 sind im Zentrum der Stempelflächen 8a, 8b befestigt und können zugleich als druckdichte Faserdurchführungen 16, 17 ausgeführt sein. Die Faservorspannung ist gross genug gewählt, um den gewünschten Druck- und Temperaturbereich abzudecken. Bevorzugt ist die Temperatursensorfaser 19 vor dem Medium 11 durch eine Kapillare 24 geschützt, die durch Verstrebungen 25 gehaltert und am äusseren Ende mit nicht dargestellten Faserkabel - Klemmen ausgestattet sein kann.

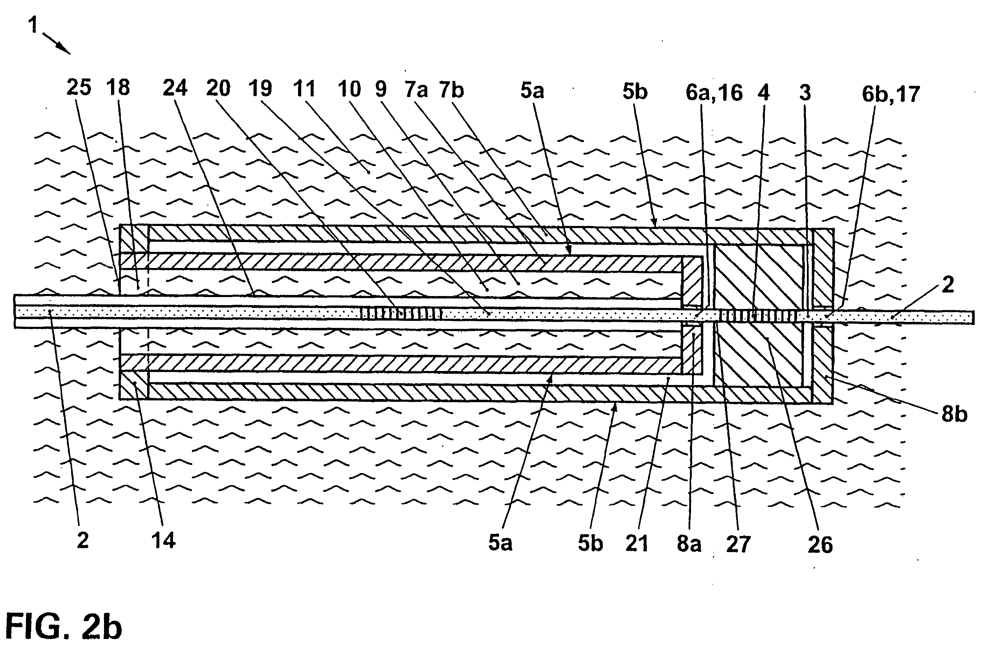

Dieser Transducer 1 zeichnet sich dadurch aus, dass die entgegengesetzte Druckdehnung der Stempelflächen 8a, 8b eine beidseitige Druckentlastung der Sensorfaser 3 und damit bei unveränderten Zylinderdimensionen, insbesondere bei konstanten Verhältnissen von Innen- zu Aussenradien, eine doppelte Drukkempfindlichkeit bewirkt. Alternativ ist die gleiche Bragg - Wellenlängenverschiebung pro Druck bei halber Länge $L_2$ des Transducers 1 erreichbar. Darüberhinaus kann der Durchmesser des Transducers 1 ohne Gehäuse 12 sehr klein gewählt sein, was für den Einsatz in Bohrlöchern von grosser Bedeutung ist. Zudem ist bei Transducern 1 nach Fig. 2a oder 2b eine Temperaturkompensation durch eine massgeschneiderte differentielle Ausdehnung der Zylinder 7a, 7b gemäss Fig. 1a oder 1b erzielbar.

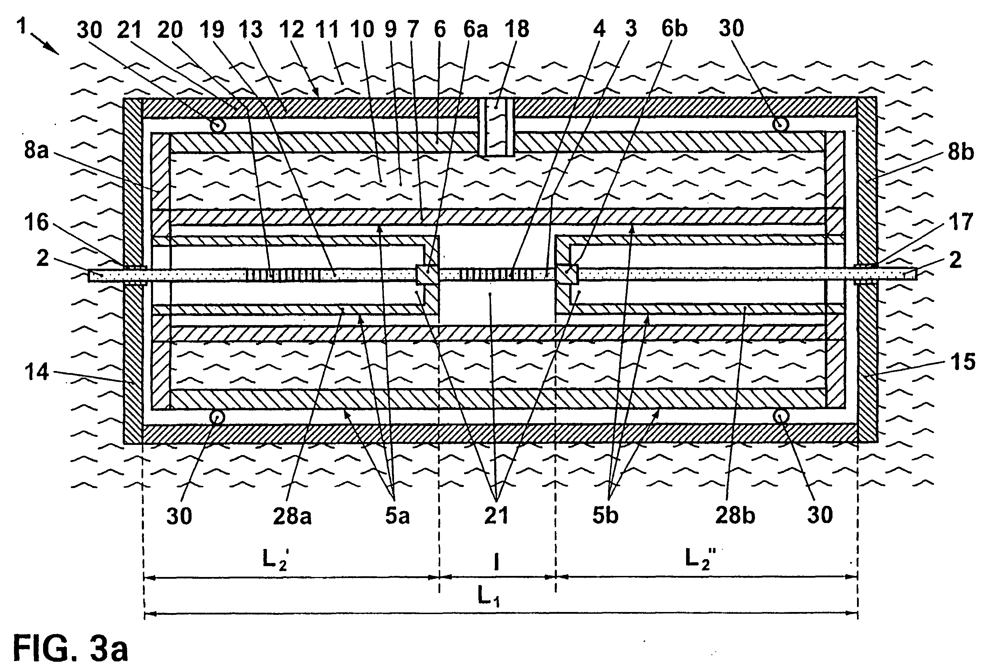

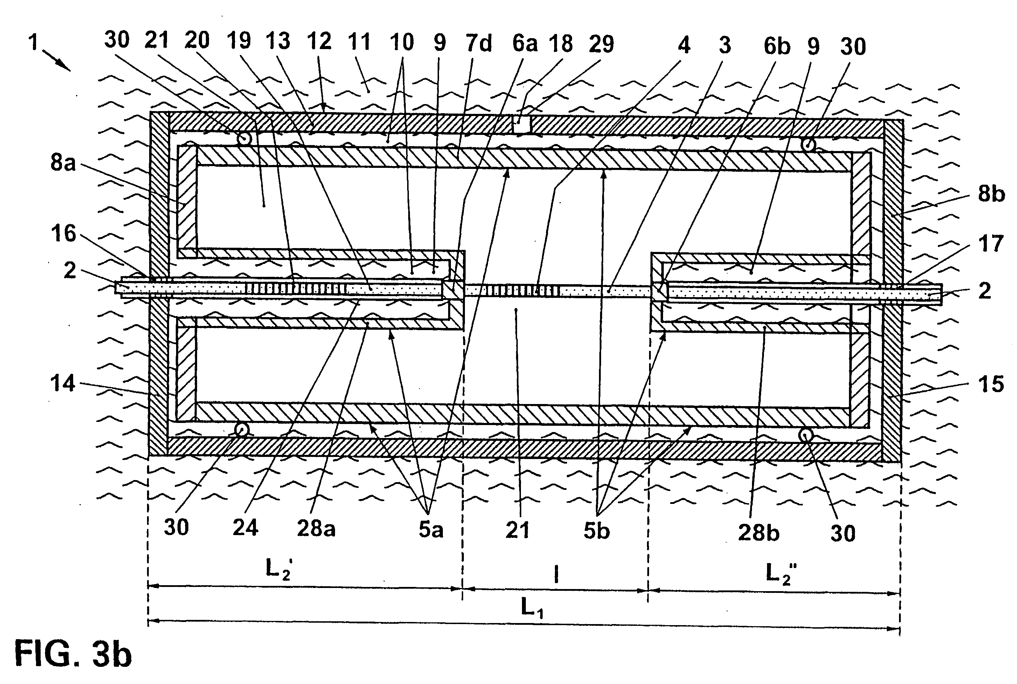

Fig. 2b stellt eine Variante zu Fig. 2a dar, bei welcher die Drucksensorfaser 3 auf Kompression belastbar ist. Für diesen Zweck ist im Gehäuseinneren 21 ein vorzugsweise zylindrischer Block 26 mit einer Bohrung 27 angeordnet, der zur Aufnahme der Drucksensorfaser 3 mit dem Faser - Bragg - Gitter 4 dient. Der Bohrlochdurchmesser ist etwas grösser als der Faserdurchmesser gewählt, so dass die Faser longitudinal verschiebbar ist, jedoch unter Kompression nicht seitlich ausweichen kann. Wegen der grossen Druckfestigkeit der Faser 3 sind ein sehr grosser Messbereich und ein hohes Auflösungsvermögen realisierbar. Grundsätzlich kann jede Ausführungsform des erfindungsgemässen Transducers 1, bei welcher die Sensorfaser 3 druckentlastet wird (Fig. 2a, 2b, 3b) oder unter Vorkompression gesetzt werden kann (Fig. 1a, 1b, 3a), mit einer solchen Kompressionsanordnung 26, 27 ausgerüstet sein.

Fig. 3a stellt ein weiteres Ausführungsbeispiel eines Transducers 1 dar. Die zwei Träger 5a, 5b zur Befestigung der Faserhalterungen 6a, 6b sind hier zu einem gemeinsamen Hohl- oder Ringzylinder 7c zusammengefügt und stützen sich gegeneinander ab. Somit umfassen die Träger 5a, 5b als Druckzylinder 7c den durch Innendruck dehnbaren Ringzylinder 7c sowie separate Halterungen 28a, 28b, insbesondere symmetrisch angeordnete Mittenzylinder 28a, 28b, über welche die Faserhalterungen 6a, 6b mit dem Ringzylinder 7c in Wirkverbindung stehen. Insbesondere weist der Ringzylinder 7c einen Hohlraum 9 mit einer Öffnung 18 seitlich in der Zylinderaussenwand und endseitigen Stempelflächen 8a, 8b in Form ringförmiger Zylinderdeckel 8a, 8b auf. Der Ringzylinder 7c ist mit dem Gehausezylinder 13 im Bereich der Öffnung 18 druckdicht verbunden und über Positionierungselemente 30 im Transducer - Gehäuse 12 gelagert. Das Gehäuseinnere 21 ausserhalb des Ringzylinders 7c ist vorzugsweise mit einem Niederdruckgas gefüllt. Alternativ kann ein Gas oder Luft z. B. unter Normaldruck oder Vakuum vorgesehen sein. Die optische Faser 2 erstreckt sich entlang der Achse des Ringzylinders 7c und ist im Bereich der Drucksensorfaser 3 zwischen den Faserhalterungen 6a, 6b gespannt. Mit Vorteil ist eine nicht vorgespannte Temperatursensorfaser 19 mit einem Faser - Bragg - Gitter 20 in einem Mittenzylinder 28a untergebracht. Wie zuvor sind druckdichte Faserdurchführungen 16, 17 in den Gehäusewänden 14, 15 vorgesehen.

Diese Ausführungsform zeichnet sich dadurch aus, dass beide Träger 5a, 5b einen gemeinsamen Druckkörper 7c haben. Die durch Innendruck verursachte Längenänderung des Ringzylinders 7c wird von den starren Mittenzylindern 28a, 28b in eine (absolut) gleichgrosse Längenänderung der Drucksensorfaser 3 umgesetzt. Die Innen- und Aussenwand des Ringzylinders 7c erfahren gleich grosse Dehnungen, wenn die Zylinderdeckel 8a, 8b hinreichend steif sind. Darüberhinaus ist eine symmetrische Belastung des Ringzylinders 7c durch eine geegnete Wahl der Wandstärken realisierbar.

Zur Kompensation temperaturinduzierter Bragg - Wellenlängenverschiebungen stehen nun die Längen und Ausdehnungskoeffizienten des Ringzylinders 7c ($L_1$, $\alpha_1$) und der Mittenzylinder 28a ($L_2$', $\alpha_1$) und 28b ($L_2$", $\alpha_2$) als Parameter zur Verfügung. Selbstredend können die Mittenzylinder 28a, 28b auch jeweils aus Segmenten mit unterschiedlichen Ausdehnungskoeffizienten $\alpha_1$ und $\alpha_2$ zusammengesetzt sein, wobei $L_2$' bzw. $L_2$" die Gesamtlängen der

Mittenzylinder - Segmente mit $\alpha_1$ bzw. $\alpha_2$ bezeichnen. Die thermische Dehnung der Mittenzylinder 28a, 28b bewirkt die erwünschte Entlastung der Faser 3 mit zunehmender Temperatur und wirkt der thermischen Dehnung des Ringzylinders 7c entgegen. Daher gelten für die Temperaturkompensation wiederum die erfindungsgemässen Gleichungen G10 und G11 und für den Spezialfall, dass beide Mittenzylinder 28a, 28b den gleichen Ausdehnungskoeffizient $\alpha_2$ haben, Gleichung G9. In dieser Ausführungsform ist die Druckempfindlichkeit im Vergleich zu Fig. 1a, 1b halbiert, da der Öldruck den doppelwandigen Ringzylinder 7c strecken muss. Die Vorspannung kann gleich wie bei Fig. 1a, 1b gewählt sein. Vorteilhaft ist es, dass die Sensorfaser 3, 19 entlang der Transducerachse geführt ist und keine Kapillare 24 oder ähnlichen Schutz gegen das Öl 11 benötigt.

Fig. 3b zeigt eine Variante des Transducers 1 aus Fig. 3a. Anstelle des Ringzylinders 7c umfassen die Träger ein durch Aussendruck komprimierbares Stützrohr 7d, insbesondere einen Hohl- oder Stützzylinder 7d, und durch Aussendruck dehnbare Mittenzylinder 28a, 28b. Insbesondere weist der Stützzylinder 7d endseitig Stempelflächen 8a, 8b auf, die im Bereich der Achse nach innen versetzt sind und dadurch die Mittenzylinder 28a, 28b bilden. Die Faserhalterungen 6a, 6b sind vorzugsweise an den Stempelflächen 8a, 8b der Mittenzylinder 28a, 28b befestigt. Der Druckaustausch der Druckzylinder 7d, 28a, 28b mit dem Medium 11 erfolgt wie zuvor über eine Öffnung 18, die gegebenenfalls mit einer Membran 29 o. ä. geschützt ist. Der druckdicht geschlossene Stützzylinder 7d ist nun im Innern 21 vorzugsweise mit Niederduckgas gefüllt und wieder über Positionierungselemente 30 im Gehäuse 12 gelagert. Die Anordnung der Fasern 2, 3, 19 ist unverändert. Zum Schutz der Faser 2, 19 im Fluid 10 oder Medium 11 kann eine Kapillare 24 vorgesehen sein. Unter Druck werden der Stützzylinder 7d komprimiert, die Mittenzylinder 28a, 28b gedehnt und die Drucksensorfaser 3 durch die Summe beider Deformationen entlastet. Wie in Fig. 2a ist die Faservorspannung dem gewünschten Druck- und Temperaturbereich anzupassen und es kann eine nicht dargestellte Kompressionsanordnung 26, 27 realisiert sein. Analog zu Fig. 1b können das Gehäuse 12 samt Positionierungselementen 30 entfallen. Für die Temperaturkompensation gelten die gleichen Überlegungen wie bei dem Transducer 1 nach Fig. 3a.

Ein Vorteil dieses Transducers 1 ist die im Vergleich zu Fig. 3a ca.vierfache Druckempfindlichkeit. Diese folgt einerseits aus der gleichgerichteten Dehnung der Zylinder 7d, 28a, 28b und andererseits aus der ungefähr doppelten Elastizität des Stützzylinders 7d gegenüber einem gleich dimensionierten Ringzylinder 7c.

Zusammenfassend zeigen die Fig. 1 - 3 Ausführungsbeispiele eines faseroptischen Sensors 1, der insbesondere zur Druck- und Temperaturmessung in Erdölbohrlöchern geeignet ist. Der Sensor 1 umfasst einen Transducer 1 mit Faserhalterungen 6a, 6b für eine Drucksensorfaser 3, die mindestens ein Faser - Bragg - Gitter 4 aufweist, wobei die Faserhalterungen 6a, 6b an mindestens einem Träger 5a,5b montiert sind. Erfindungsgemäss umfasst mindestens ein Träger 5a, 5b einen Druckkörper 7a - 7d, 28a, 28b, welcher zur Umsetzung eines allseitigen Drucks eines Umgebungsmediums 11 in eine longitudinale Dehnung oder Kompression der Drucksensorfaser 3 geeignet ist. Als Medium 11 kommen u. a. eine Flüssigkeit, ein Gas, ein Flüssigkeits - Gas Gemisch oder feiner Sand in Frage. Insbesondere ist der Druckkörper ein Druckzylinder 7a - 7d, 28a, 28b und weist einen Hohlraum 9 mit einer Öffnung 18 und einer Stempelfläche 8a, 8b auf, die mit einer Faserhalterung 6a, 6b in Wirkverbindung steht. Bevorzugt umfasst der Transducer 1 eine druckisolierte Kammer 21, 24 mit druckdichten Faserdurchführungen 16, 17 für die Drucksensorfaser 3 und sind genau zwei Träger (5a, 5b) vorgesehen, die aus Materialien mit unterschiedlichen thermischen Ausdehnungskoeffizienten $\alpha_1$, $\alpha_2$ bestehen oder zusammengesetzt sind, wobei eine differentielle thermische Ausdehnung zwischen den Trägern 5a, 5b einer thermisch induzierten Verschiebung der Bragg - Wellenlänge $\lambda_B$ der Drucksensorfaser 3 entgegenwirkt. Mit Vorteil ist die differentielle thermische Ausdehnung zwischen den beiden Trägern 5a, 5b, insbesondere den Zylindern 7a, 7b oder den Mittenzylindern 28a, 28b, kontinuierlich wählbar, indem mindestens einer der Träger 5a, 5b aus mindestens zwei Segmenten 22, 23 mit unterschiedlichen thermischen Ausdehnungskoeffizienten $\alpha_1$, $\alpha_2$ und vorgebbaren Längen $L_2'$, $L_2''$ zusammengesetzt ist. Auch kann eine gemeinsame Sensorfaser 3, 19 sowohl die Drucksensorfaser 3 als auch eine Temperatursensorfaser 19 mit einem Faser - Bragg - Gitter 20 aufweisen. Schliesslich sind auch Transducer 1 mit vielfältigen anderen Formen und Anordnungen von Druckkörpern möglich, durch welche Druckkörper isotroper Druck in longitudinale Dehnung oder Kompression der Drucksensorfaser 3 umgesetzt wird.

Allen Transducern 1 ist beim Einsatz in Ölbohrlöchern das Problem der Eindiffusion von Gasen, insbesondere von Wasserstoff und Kohlenwasserstoffen, in das Gehäuseinnere 21 oder in die Kapillare 24 gemeinsam. Es können hohe Wasserstoff - Partialdrücke bis zu 20 bar auftreten. In den Fasern 3, 19 verursacht Wasserstoff optische Verluste, Brechungsindexänderungen und damit störende Verschiebungen der Bragg - Wellenlänge $\lambda_B$. Ein erfindungsgemässer Schutz der Sensorfasern 3, 19 besteht darin, die nicht mit dem Öl 11 in Kontakt stehenden Transducerflächen, insbesondere das Gehäuseinnere 21 und/oder die Kapillare 24, vorzugsweise mit Gold zu beschichten.

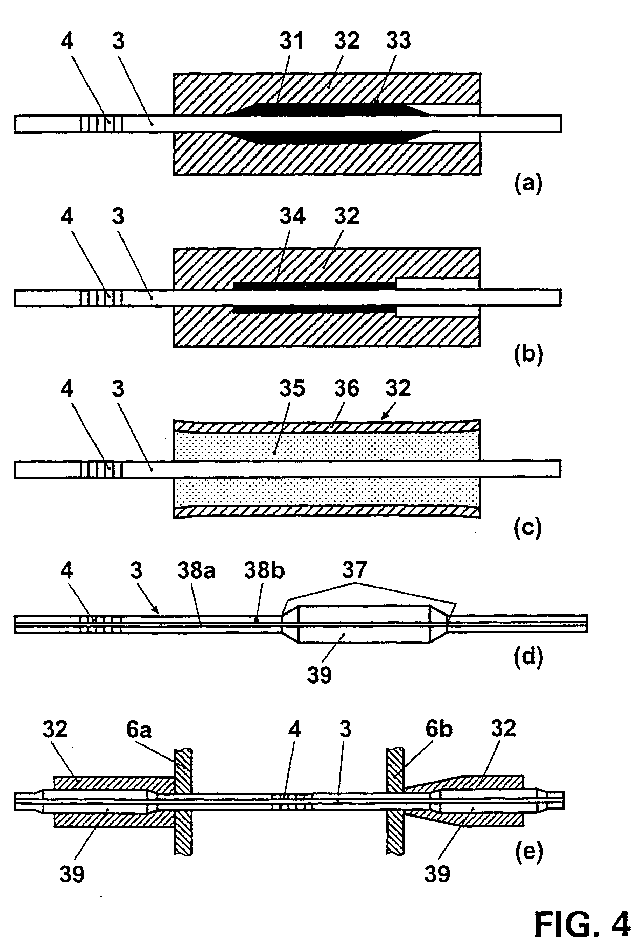

Fig. 4 zeigt Ausführungsbeispiele zu Ferrulen 32. Die Verankerung der Drucksensorfaser 3 in den Ferrulen 32 ist sehr kritisch, da die Genauigkeit und Langzeitstabilität des Sensors 1 durch Kriechen der Faser 3 beeinträchtigt wird. In Fig. 4a ist die Faser 3 mit einer konzentrischen Glaskapillare verschmolzen, die beispielsweise durch eine Klebung 33 in einem Ferrul 32 befestigbar ist. Gegebenenfalls sind mehrere Glaskapillare übereinander gespleisst. In Fig. 4b ist die Faser 3 durch Glaslot 34 mit dem Ferrul 32 verbunden. Das Ferrul 32 kann auch an mindestens einer Seite offen sein, um einen kontrollierten, gleichmässigen Auftrag mit Glaslot 34 sicherzustellen. In Fig. 4c ist ein Klemmferrul 32 angegeben, bei welchem ein Vollzylinder aus Weichmetall 35 durch Anpressen eines Hohlzylinders aus Hartmetall 36 an der Faser 3 fixiert ist. Vorteilhafterweise ist die Anpressung in der Ferrulmitte am stärksten, um einen nach aussen abnehmenden longitudinalen Stress auf die Faser 3 zu erzielen. In Fig. 4d ist in die Sensorfaser 3 ein Faserstück mit ähnlichem Durchmesser des Faserkerns 38a und dickerer Faserhülle ("cladding") 38b über Spleisse 37 eingefügt, welches sehr einfach in einem Ferrul 32 fixierbar ist. Eine andere, nicht dargestellte Lösung besteht darin, die Drucksensorfaser 3 mit einem hochtemperaturstabilen Klebstoff, z. B. auf Polyimidbasis, in eine V - Nut zu kleben. Fig. 4e zeigt schliesslich, wie die vorzugsweise zylindrischen oder konischen Ferrule 32 in oder an Ferrulhalterungen 6a, 6b befestigbar sind. Eine besonders platzsparende Lösung besteht darin, die Faserhalter 6a, 6b selber mit einer Bohrung zur Aufnahme der Faser 3 zu versehen oder sie als Ferrule 32 auszugestalten.

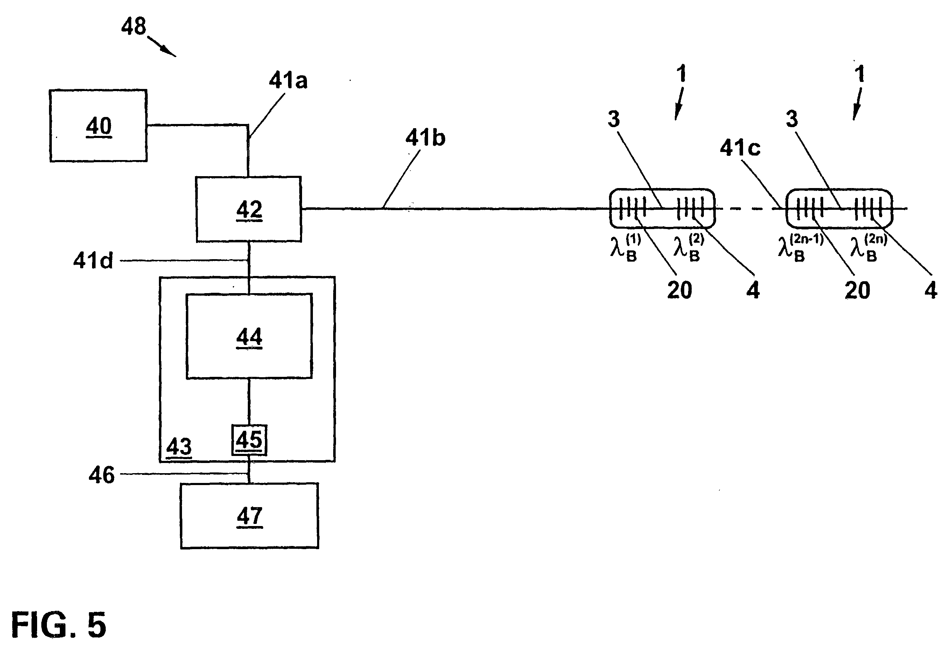

Fig. 5 zeigt einen Gesamtaufbau eines quasiverteilten Druck- und Temperatursensors 48. Beispielhaft ist eine Wellenlängen - Multiplexanordnung mit mehreren, seriell hintereinander geschalteten und in Reflexion betriebenen Transducern 1 gezeigt. Die Transducer 1 haben unterschiedliche Bragg - Wellenlängen $\lambda_B{}^{(i)}$ ihrer Faser - Bragg - Gitter zur Druckmessung 4 und Temperaturmessung 20. Die Transducer 1 stehen mit einer Breitbandlichtquelle 40 und einer Detektionseinheit 43 vorzugsweise über einen Faserkoppler 42 in optischer Verbindung. Insbesondere sind Zuführungsfasern 41a - 41d zur Überbrückung der optischen Strecken zwischen der aktiven Sensoroptoelektronik 40, 43, 47 und den Transducern 1 vorgesehen. Die Detektionseinheit 43 weist einen Wellenlängendemultiplexer 44 und einen Detektor 45 auf, der typischerweise über eine elektrische Signalleitung 46 mit einer Auswerteelektronik 47 verbunden ist. Der Wellenlängendemultiplexer 44 kann ein abstimmbares Spektralfilter, z. B. ein abstimmbares Fabry - Perot Interferenzfilter oder ein abstimmbarer akustooptischer Modulator, sein. Die Spektralbreite des Filters soll vergleichbar mit derjenigen der Faser - Bragg - Gitter 4, 20 und vorzugsweise kleiner sein. Die Transducer 1 werden von der Photodiode 45 individuell detektiert, indem das Filter auf die zugehörigen Bragg - Wellenlängen $\lambda_B{}^{(i)}$ durchgestimmt wird. Die Fasern 2, 3, 19, 41a - 41d können von beliebigem Typus sein. Bevorzugt sind die Sensorfasern 3, 19 mit den Faser - Bragg - Gittern 4, 20 monomodig.

Als Breitbandlichtquelle 40 für die dargestellte serielle Wellenlängenmultiplexanordnung 48 sind mit seltenen Erden dotierte Faserlaser, Lumineszenzdioden ("LED") und Superlumineszenzdioden ("SLD") besonders geeignet. Der spektrale Emissionsbereich umfasst die Bragg - Wellenlängen $\lambda_B{}^{(1)}$, ... $\lambda_B{}^{(2n)}$ der n Transducer 1 im gesamten Druck - und Temperatur - Abstimmbereich. Die individuellen Abstimmbereiche sollen nichtüberlappend sein. Für grosse Faserstrecken 41a - 41d im mehrere km - Bereich ist eine zentrale Wellenlänge von 1550 nm für minimale Verluste vorteilhaft. Die typische spektrale Breite beträgt dann $\pm$ 25 nm. Es sei eine maximale Dehnung des temperaturkompensierten Drucksensor Faser - Bragg - Gitters 4 von 0,005 und ein Temperaturbereich von 230 °C angenommen. Die zugehörigen Abstimmbereiche betragen dann für die Druckmessung 6 nm und die Temperaturmessung 2,3 nm. Mit Sicherheitsmargen benötigt ein Transducer 1 daher ein Wellenlängenfenster von ca. 10 nm und die maximale Anzahl wellenlängenmultiplexierbarer Druck- und Temperaturtransducer 1 ist auf fünf beschränkt. Zur Erhöhung dieser Anzahl sind alternativ oder ergänzend zum Wellenlängenmultiplexen andere Multiplexverfahren, z. B. Zeitmultiplexen oder die Verwendung faseroptischer Schalter, möglich. Zudem sind auch parallele oder netzwerkartige Konfigurationen von reflexiv und/ oder transmissiv auszulesenden Transducern 1 auf einfache Weise realisierbar.

Insgesamt offenbart die Erfindung einen Faser - Bragg - Gitter - Sensor 1, 48 mit verschiedenen Transducern 1 zur Umsetzung des hydrostatischen Drucks eines flüssigen oder gasförmigen Mediums 11 in eine longitudinale Faserdehnung oder Faserkompression. Temperaturkompensierte Transducer 1 mit stabiler Bragg - Wellenlänge $\lambda_B$ sind dadurch realisierbar, dass eine geeignete Temperaturabhängigkeit der mechanischen Vorspannung der Drucksensorfaser 3 durch die Wahl der Materialien, Längen und Anordnungen der Faserhalter - Träger 5a, 5b eingeführt wird. Ergänzend oder alternativ zur passiven Temperaturkompensation ist eine aktive Temperaturmessung mit einem zusätzlichen Faser - Bragg - Gitter 20 und einer Drucksignalkorrektur möglich. Die Transducer 1 sind für den Einsatz bei hohen Drücken und Temperaturen sehr geeignet.

**BEZUGSZEICHENLISTE**

| | |
|---|---|
| 1 | Faseroptischer Druck- und Temperatursensor (Transducer) |
| 2 | optische Faser |
| 3, 19 | Sensorfaser(n) |
| 3 | Sensorfaserabschnitt, Drucksensorfaser |
| 4 | Faser - Bragg - Gitter (für Druckmessung) |

| | | |
|---|---|---|
| 5a, 5b | Träger |
| 6a, 6b | Faserhalterungen, Ferrulhalterungen |
| 7a - 7d | Druckkörper, Druckzylinder |
| 7a | Innenzylinder |
| 7b | Referenzzylinder; Aussenzylinder |
| 7c | Ringzylinder |
| 7d | Stützzylinder |
| 8a, 8b | Stempelflächen, Endplatten, Zylinderdeckel |
| 9 | Hohlraum |
| 10 | Fluid, Silikonöl; Medium |
| 11 | Medium |
| 12 | Transducer - Gehäuse |
| 13 | Gehäusezylinder |
| 14, 15 | Transducer - Wand, Gehäusewand |
| 16, 17 | druckdichte Faserdurchführungen |
| 18 | Öffnung |
| 19 | Sensorfaserabschnitt, Temperatursensorfaser |
| 20 | Faser - Bragg - Gitter (für Temperaturmessung) |
| 21 | Gehäuseinneres, Zylinderinneres, Niederdruckgas |
| 22, 23 | Aussenzylindersegmente |
| 24 | Kapillare |
| 25 | Verstrebung |
| 26 | Block |
| 27 | Bohrung |
| 28a, 28b | Halterungen, Mittenzylinder |
| 29 | Druckausgleichselement, Membran, Faltenbalg |
| 30 | Positionierungselemente |
| 31 | Glaskapillare (aufgeschmolzen) |
| 32 | Ferrule |

| | |
|---|---|
| 33 | Klebung |
| 34 | Glaslot |
| 35 | Weichmetall |
| 36 | Hartmetall |
| 37 | Spleisse |
| 38a | Faserkern |
| 38b | Faserhülle ("cladding") |
| 39 | Faserzwischenstück |
| 40 | Breitbandlichtquelle |
| 41a - 41d | Zuführungsfasern |
| 42 | Faserkoppler |
| 43 | Detektionseinheit |
| 44 | Wellenlängendemultiplexer, (abstimmbares) Spektralfilter |
| 45 | Detektor, Photodiode |
| 46 | Signalleitung |
| 47 | Auswerteelektronik |
| 48 | Gesamtsensor |
| $l$ | Länge der Drucksensorfaser |
| $\Delta l$ | Dehnung der Drucksensorfaser |
| $L_1$ | Länge des Druckzylinders |
| $L_2$ | Länge des Referenzzylinders |
| $L_2'$, $L_2''$ | Teillängen des Referenzzylinders |
| $\Delta L_1$ | Dehnung des Druckzylinders |
| $R_i$ | Innenradius des Druckzylinders |
| $R_a$ | Aussenradius des Druckzylinders |
| $E$ | Young scher Elastizitätsmodul des Druckzylinders |
| $p$ | Messdruck |
| $p_{max}$ | maximaler Messdruck |
| $T$ | Temperatur |

$\alpha_1, \alpha_2, \alpha_f$       thermische Ausdehnungskoeffizienten

$\Delta\varepsilon_T$       thermisch induzierte Faserdehnung

$\lambda_B, \lambda_B^{(i)}$       Bragg - Wellenlänge

$(\Delta\lambda_B)_T, (\Delta\lambda_B)_\varepsilon$       Bragg - Wellenlängenverschiebungen

i,, n       Indizes

**Patentansprüche**

1. Faseroptischer Drucksensor (1, 48), insbesondere geeignet zur Druck- und Temperaturmessung in Erdölbohrlöchern, umfassend einen Transducer (1) mit Faserhalterungen (6a, 6b) für eine Drucksensorfaser (3), wobei die Faserhalterungen (6a, 6b) an mindestens einem Träger (5a, 5b) montiert sind, wobei mindestens ein Träger (5a, 5b) einen Druckkörper (7a - 7d, 28a, 28b) zur Umsetzung eines allseitigen Drucks eines Mediums (11) in eine longitudinale Dehnung oder Kompression der Drucksensorfaser (3) umfasst, wobei die Drucksensorfaser (3) mindestens ein Faser-Bragg-Gitter (4) aufweist, wobei sie im Bereich mindestens eines Faser-Bragg-Gitters (4) vorgespannt oder vorkomprimiert ist, **dadurch gekennzeichnet, dass** der Transducer (1) eine druckisolierte Kammer (21, 24) mit druckdichten Faserdurchführungen (16, 17) für die Drucksensorfaser (3) umfasst.

2. Faseroptischer Sensor (1, 48) nach Anspruch 1, **dadurch gekennzeichnet, dass**

   a) genau zwei Träger (5a, 5b) vorgesehen sind, die aus Materialien mit unterschiedlichen thermischen Ausdehnungskoeffizienten ($\alpha_1, \alpha_2$) bestehen oder zusammengesetzt sind,
   b) eine differentielle thermische Ausdehnung zwischen den Trägern (5a, 5b) einer thermisch induzierten Verschiebung der Bragg - Wellenlänge ($\lambda_B$) der Drucksensorfaser (3) entgegenwirkt und
   c) insbesondere mindestens einer der Träger (5a, 5b) aus mindestens zwei Segmenten (22, 23) mit unterschiedlichen thermischen Ausdehnungskoeffizienten und vorgebbaren Längen zusammengesetzt ist.

3. Faseroptischer Sensor (1, 48) nach einem der Ansprüche 1 - 2, **dadurch gekennzeichnet, dass**

   a) eine Sensorfaser (3, 19) sowohl die Drucksensorfaser (3) als auch eine Temperatursensorfaser (19) umfasst und
   b) die Temperatursensorfaser (19) ein Faser - Bragg - Gitter (20) aufweist.

4. Faseroptischer Sensor (1, 48) nach einem der Ansprüche 1 - 3, **dadurch gekennzeichnet, dass**

   a) der Druckkörper ein Druckzylinder (7a - 7d, 28a, 28b) ist,
   b) der Druckzylinder (7a - 7d) einen Hohlraum (9) mit einer Öffnung (18) und mindestens einer Stempelfläche (8a, 8b) aufweist und
   c) die Stempelfläche (8a, 8b) mit einer Faserhalterung (6a, 6b) in Wirkverbindung steht.

5. Faseroptischer Sensor (1, 48) nach Anspruch 4, **dadurch gekennzeichnet, dass**

   a) ein erster Träger (5a) als Druckzylinder einen durch Innendruck dehnbaren Innenzylinder (7a) umfasst,
   b) ein zweiter Träger (5b) einen von einem Umgebungsmedium (11) abgeschirmten Aussenzylinder (7b) umfasst,
   c) die Zylinder (7a, 7b) an einer Transducer - Wand (14) befestigt und in einem Transducer - Gehäuse (12) gekapselt sind.

6. Faseroptischer Sensor (1, 48) nach Anspruch 4, **dadurch gekennzeichnet, dass**

   a) ein erster Träger (5a) als Druckzylinder einen durch Innendruck dehnbaren Innenzylinder (7a) umfasst,
   b) ein zweiter Träger (5b) einen durch Aussendruck komprimierbaren Aussenzylinder (7b) umfasst und
   c) die Zylinder (7a, 7b) an einer Transducer - Wand (14) befestigt sind.

7. Faseroptischer Sensor (1, 48) nach Anspruch 4, **dadurch gekennzeichnet, dass**

   a) die Träger (5a, 5b) als Druckzylinder einen durch Innendruck dehnbaren Ringzylinder (7c) umfassen,
   b) der Ringzylinder (7c) über Positionierungselemente (30) in einem Transducer - Gehäuse (12) gelagert ist und
   c) die Faserhalterungen (6a, 6b) über Mittenzylinder (28a, 28b) mit dem Ringzylinder (7c) in Wirkverbindung stehen.

8. Faseroptischer Sensor (1, 48) nach Anspruch 4, **dadurch gekennzeichnet, dass**

   a) die Träger (5a, 5b) einen durch Aussendruck komprimierbaren Stützzylinder (7d) und durch Aussendruck dehnbare Mittenzylinder (28a, 28b) umfassen und
   b) die Faserhalterungen (6a, 6b) an den Stempelflächen (8a, 8b) der Mittenzylinder (28a, 28b) befestigt sind.

9. Faseroptischer Sensor (1, 48) nach einem der Ansprüche 1 - 8, **dadurch gekennzeichnet, dass**

   a) mehrere Transducer (1) unterschiedlicher Bragg - Wellenlänge ($\lambda_B^{(i)}$) mit einer Breitbandlichtquelle (40) und einer Detektionseinheit (43) vorzugsweise über einen Faserkoppler (42) in optischer Verbindung stehen und
   b) die Detektionseinheit (43) einen Wellenlängendemultiplexer (44) und einen Detektor (45) aufweist, der mit einer Auswerteelektronik (47) verbunden ist.

10. Faseroptischer Sensor (1, 48) nach einem der Ansprüche 1 - 9, **dadurch gekennzeichnet, dass**

    a) zur Aufnahme der Drucksensorfaser (3) ein Block (26) mit einer Bohrung (27) vorgesehen ist,
    b) der Druckkörper (7a - 7d, 28a, 28b) mit einem Fluid (10), insbesondere Silikonöl, gefüllt ist und
    c) die druckisolierte Kammer (21, 24) unter Niederdruckgas oder Vakuum steht.

## Claims

1. Fibre-optic pressure sensor (1, 48), particularly suitable for pressure and temperature measurement in oil drill holes, comprising a transducer (1) with fibre holders (6a, 6b) for a pressure sensor fibre (3), the fibre holders (6a, 6b) being mounted on at least one support (5a, 5b), at least one support (5a, 5b) comprising a pressure member (7a - 7d, 28a, 28b) for converting an all-round pressure of a medium (11) into a longitudinal elongation or compression of the pressure sensor fibre (3), the pressure sensor fibre (3) having at least one fibre Bragg grating (4) and being prestressed or precompressed in the region of at least one fibre Bragg grating (4), **characterized in that** the transducer (1) comprises a pressure-insulated chamber (21, 24) with pressure-tight fibre bushings (16, 17) for the pressure sensor fibre (3).

2. Fibre-optic sensor (1, 48) according to Claim 1, **characterized in that**

   a) precisely two supports (5a, 5b) are provided, which consist of, or are assembled from, materials with different coefficients of thermal expansion ($\alpha_1$, $\alpha_2$),
   b) a differential thermal expansion between the supports (5a, 5b) counteracts a thermally induced displacement of the Bragg wavelength ($\lambda_B$) of the pressure sensor fibre (3), and
   c) in particular, at least one of the supports (5a, 5b) is assembled from at least two segments (22, 23) with different coefficients of thermal expansion and prescribable lengths.

3. Fibre-optic sensor (1, 48) according to one of Claims 1-2, **characterized in that**

   a) a sensor fibre (3, 19) comprises both the pressure sensor fibre (3) and a temperature sensor fibre (19), and
   b) the temperature sensor fibre (19) has a fibre Bragg grating (20).

4. Fibre-optic sensor. (1, 48) according to one of Claims 1-3, **characterized in that**

   a) the pressure member is a pressure cylinder (7a - 7d, 28a, 28b),
   b) the pressure cylinder (7a - 7d) has a cavity (9) with an opening (18) and at least one plunger face (8a, 8b), and

c) the plunger face (8a, 8b) is operationally connected to a fibre holder (6a, 6b).

5. Fibre-optic sensor (1, 48) according to Claim 4, **characterized in that**

   a) a first support (5a) comprises as pressure cylinder an inner cylinder (7a) extendable by internal pressure,
   b) a second support (5b) comprises an outer cylinder (7b) shielded from an ambient medium (11), and
   c) the cylinders (7a, 7b) are fastened on a transducer wall (14) and encapsulated in a transducer housing (12).

6. Fibre-optic sensor (1, 48) acccording to Claim 4, **characterized in that**

   a) a first support (5a) comprises as pressure cylinder an inner cylinder (7a) extendable by internal pressure,
   b) a second support (5b) comprises an outer cylinder (7b) compressible by external pressure, and
   c) the cylinders (7a, 7b) are fastened on a transducer wall (14).

7. Fibre-optic sensor (1, 48) according to Claim 4, **characterized in that**

   a) the supports (5a, 5b) comprise as pressure cylinder an annular cylinder (7c) extendable by internal pressure,
   b) the annular cylinder (7c) is mounted in a transducer housing (12) via positioning elements (30), and
   c) the fibre holders (6a, 6b) are operationally connected to the annular cylinder (7c) via centre cylinders (28a, 28b).

8. Fibre-optic sensor (1, 48) according to Claim 4, **characterized in that**

   a) the supports (5a, 5b) comprise a supporting cylinder (7d) compressible by external pressure, and centre cylinders (28a, 28b) extendable by external pressure, and
   b) the fibre holders (6a, 6b) are fastened on the plunger faces (8a, 8b) of the centre cylinders (28a, 28b).

9. Fibre-optic sensor (1, 48) according to one of Claims 1-8, **characterized in that**

   a) several transducers (1) of different Bragg wavelength ($\lambda_B^{(i)}$) are optically connected to a broadband light source (40) and a detection unit (43), preferably via a fibre coupler (42), and
   b) the detection unit (43) has a wavelength demultiplexer (44) and a detector (45) which is connected to an electronic evaluation system (47).

10. Fibre-optic sensor (1, 48) according to one of Claims 1-9, **characterized in that**

   a) a block (26) with a bore (27) is provided for accommodating the pressure sensor fibre (3),
   b) the pressure member (7a - 7d, 28a, 28b) is filled with a fluid (10), in particular silicone oil, and
   c) the pressure-insulated chamber (21, 24) is filled with gas at low pressure or evacuated.

**Revendications**

1. Capteur de pression à fibre optique (1, 48) approprié en particulier pour les mesures de pression et de température dans des trous de forage pétroliers, comprenant un transducteur (1) avec des fixations de fibre (6a, 6b) pour une fibre de détection de pression (3), dans lequel les fixations de fibre (6a, 6b) sont montées au moins sur un support (5a, 5b), dans lequel au moins un support (5a, 5b) comprend un corps de pression (7a-7d, 28a, 28b) pour convertir une pression polydirectionnelle d'un milieu (11) en une dilatation ou compression longitudinale de la fibre de détection de pression (3), et dans lequel la fibre de détection de pression (3) possède au moins un réseau Bragg à fibre (4), celle-ci étant tendue ou comprimée initialement au moins dans la zone du réseau Bragg à fibre (4), **caractérisé en ce que** le transducteur (1) comprend une chambre isolée en pression (21, 24) avec des passages de fibre étanches à la pression (16, 17) pour la fibre de détection de pression (3).

2. Capteur à fibre optique (1, 48) selon la revendication 1, **caractérisé en ce que**

   a) il est prévu exactement deux supports (5a, 5b) qui sont constitués ou composés de matériaux dotés de coefficients de dilatation thermique ($\alpha_1$, $\alpha_2$) différents,
   b) une dilatation thermique différentielle entre les supports (5a, 5b) s'oppose à un décalage induit thermiquement de la longueur d'onde de Bragg ($\lambda_B$) de la fibre de détection de pression (3) et

c) en particulier au moins un des supports (5a, 5b) est composé d'au moins deux segments (22, 23) dotés de coefficients de dilatation thermique différents et de longueurs pouvant être prédéfinies.

**3.** Capteur à fibre optique (1, 48) selon une des revendications 1 et 2, **caractérisé en ce que**

a) une fibre de détection (3, 19) comprend aussi bien la fibre de détection de pression (3) qu'une fibre de détection de température (19) et

b) la fibre de détection de température (19) possède un réseau Bragg à fibre (20).

**4.** Capteur à fibre optique (1, 48) selon l'une quelconque des revendications 1 à 3, **caractérisé en ce que**

a) le corps de pression est un cylindre de pression (7a-7d, 28a, 28b),

b) le cylindre de pression (7a-7d) possède une cavité (9) avec une ouverture (18) et au moins une surface estampée (8a, 8b) et

c) la surface estampée (8a, 8b) est en liaison active avec une fixation de fibre (6a, 6b).

**5.** Capteur à fibre optique (1, 48) selon la revendication 4, **caractérisé en ce que**

a) un premier support (5a) comprend en guise de cylindre de pression un cylindre intérieur (7a) pouvant être dilaté par la pression intérieure,

b) un deuxième support (5b) comprend un cylindre extérieur (7b) isolé par rapport à un milieu environnant (11) et

c) les cylindres (7a, 7b) sont fixés sur une paroi (14) de transducteur et logés dans une enceinte (12) de transducteur.

**6.** Capteur à fibre optique (1, 48) selon la revendication 4, **caractérisé en ce que**

a) un premier support (5a) comprend en guise de cylindre de pression un cylindre intérieur (7a) pouvant être dilaté par la pression intérieure,

b) un deuxième support (5b) comprend un cylindre extérieur (7b) pouvant être comprimé par la pression extérieure, et

c) les cylindres (7a, 7b) sont fixés sur une paroi (14) de transducteur.

**7.** Capteur à fibre optique (1, 48) selon la revendication 4, **caractérisé en ce que**

a) les supports (5a, 5b) comprennent en guise de cylindre de pression un cylindre annulaire (7c) pouvant être dilaté par la pression intérieure,

b) le cylindre annulaire (7c) est monté dans une enceinte (12) de transducteur avec des éléments de positionnement (30), et

c) les fixations de fibre (6a, 6b) sont mises en liaison active avec le cylindre annulaire (7c) par des cylindres centraux (28a, 28b).

**8.** Capteur à fibre optique (1, 48) selon la revendication 4, **caractérisé en ce que**

a) les supports (5a, 5b) comprennent un cylindre de support (7d) pouvant être comprimé par la pression extérieure et des cylindres centraux (28a, 28b) pouvant être dilatés par la pression extérieure et

b) les fixations de fibre (6a, 6b) sont fixées sur les surfaces estampées (8a, 8b) des cylindres centraux (28a, 28b).

**9.** Capteur à fibre optique (1, 48) selon l'une quelconque des revendications 1 à 8, **caractérisé en ce que**

a) plusieurs transducteurs (1) de longueurs d'onde de Bragg ($\lambda_B^{(i)}$) différentes sont en liaison optique avec une source lumineuse à bande large (40) et une unité de détection (43) de préférence par un coupleur à fibre (42) et

b) l'unité de détection (43) possède un démultiplexeur de longueurs d'onde (44) et un détecteur (45) qui est relié avec une unité électronique d'analyse (47).

**10.** Capteur à fibre optique (1, 48) selon l'une quelconque des revendications 1 à 9, **caractérisé en ce que**

a) il est prévu pour recevoir la fibre de détection de pression (3) un bloc (26) avec un perçage (27),
b) le corps de pression (7a-7d, 28a, 28b) est rempli avec un fluide (10), en particulier de l'huile de silicone et
c) la chambre isolée en pression (21, 24) est remplie de gaz sous basse pression ou sous vide.

FIG. 1a

FIG. 1b

EP 1 058 822 B1

FIG. 2a

EP 1 058 822 B1

FIG. 2b

EP 1 058 822 B1

**FIG. 3a**

EP 1 058 822 B1

FIG. 3b

FIG. 4

FIG. 5

EP 1 058 822 B1